# NEUE EUROPÄISCHE PATENTSCHRIFT

(11) **EP 2 239 374 B2**
(45) Veröffentlichungstag und Bekanntmachung des Hinweises auf die Entscheidung über den Einspruch: **15.03.2017**
(45) Hinweis auf die Patenterteilung: 07.05.2014
(21) Anmeldenummer: 09005011.3
(22) Anmeldetag: 03.04.2009
(51) Int. Cl.: E01C 19/48

(54) **Strassenfertiger**
Paver
Finisseuse de route

(43) Veröffentlichungstag der Anmeldung: 13.10.2010
(73) Patentinhaber: Joseph Vögele AG, 67067 Ludwigshafen (DE)
(72) Erfinder: Zegowitz, Günter, 64732 Bad König (DE)
(74) Vertreter: Grünecker Patent- und Rechtsanwälte PartG mbB

(56) Entgegenhaltungen:
- EP-A- 1 845 197
- EP-A- 2 018 981
- EP-A1- 1 760 640
- WO-A1-00/19235
- US-A1- 2001 204 712
- US-A1- 2002 140 923
- US-A1- 2004 024 510
- US-A1- 2004 054 457
- US-A1- 2005 197 756
- US-A1- 2007 075 873
- US-A1- 2009 065 329
- US-B2- 6 748 797
- US-B2- 7 488 138
- PC Magazine - "How GPS receivers Work"

## Beschreibung

Die vorliegende Erfindung bezieht sich auf einen Straßenfertiger mit einer programmierten oder programmierbaren Steuerung und einer oder mehreren Zusatzkomponenten, die wahlweise an den Straßenfertiger anschließbar sind.

Beispielsweise aus der EP 1 845 197 A1 sind Straßenfertiger bekannt, die dem Oberbegriff des Anspruchs 1 entsprechen und eine Zugmaschine mit angebautem Verdichtungsgerät, der sogenannte Einbohle, aufweisen. Diese Einbaubohlen gibt es als Ausziehbohle, starre Bohle oder eine Sonderbohle. Die Bohle wird deshalb als mechanische auswechselbare Zusatzkomponente angesehen.

Mittels der Zugmaschine wird das Material für den zu fertigenden Straßenbelag, beispielsweise Einbaumischgut, transportiert und während der Fahrt der Zugmaschine auf die gewünschte Straßenbreite verteilt. Die Einbaubohle sorgt für das Komprimieren und Glätten des Straßenbelags.

Diese bekannten Straßenfertiger sind durch unterschiedliche mechanische Zusatzkomponenten aufrüstbar, um äußerst variabel eingesetzt werden zu können. Beispielsweise können unterschiedliche Einbaubohlen verwendet, oder auch feste Verlängerungsstücke seitlich an die Einbaubohle angesetzt werden, um die Fertigungsbreite zu vergrößern. Bei einigen Fertigern können auch Zusatzkomponenten zum Aufrüsten des Straßenfertigers zu einem Sprühfertiger mit der Zugmaschine verbunden werden. Bei der Sprühfertigung wird ein Bindemittel, beispielsweise eine Bitumenemulsion, auf die Rohdecke beziehungsweise das "Planum" aufgebracht, um dort eine Haftschicht für den unmittelbar danach aufgebrachten Straßenbelag zu bilden. Um den Straßenfertiger zu einem SprühFertiger aufzurüsten, werden als Zusatzmodule beispielsweise ein oder mehrere Sprühmodule zur Bevorratung, zum Beheizen, zum Filtern und zum Ausbringen der Bitumenemulsion, seitliche Sprührampen und/oder Zusatztankmodule am Straßenfertiger angebracht.

Der herkömmliche Straßenfertiger verfügt ferner über eine Steuerung, die auf verschiedene Arten programmierbar ist, und die sämtliche Abläufe und Komponenten am Straßenfertiger steuert und kontrolliert.

Damit die Steuerung diese Funktionen erfüllen kann, muss das Bedienpersonal die Steuerung nach jedem Umbau/Umrüstung des Straßenfertigers geeignet konfigurieren oder programmieren. Insbesondere müssen dabei die Daten sämtlicher Zusatzgeräte eingegeben werden, üblicherweise über eine Tastatur, damit die Steuerung diese Zusatzkomponenten berücksichtigen kann.

Es ist offensichtlich, dass diese manuelle Programmierung der Steuerung unbefriedigend ist. Zum einen erhöht sich durch das Programmieren die Standzeit des Straßenfertigers, weil der Fertiger erst nach Abschluss der Programmierung seine Arbeit wieder aufnehmen kann. Zum anderen könnte eine Fehlprogrammierung durch eine versehentlich falsche Eingabe erfolgen und so die Fertigung der Straßendecke stören.

Erste Ansätze zum Automatisieren einer Steuerung eines Straßenfertigers werden in der US 2004/0024510 A1 vorgestellt. Die dort beschriebene Maschinensteuerung verwendet ein Funk-Telemetrie-System, um automatisch Zusatzteile zu erkennen und deren Parameter in der Steuerung der Arbeitsmaschine berücksichtigen zu können. Die EP 2 018 981 A1 bezieht sich ebenfalls ein Steuerungsverfahren, allerdings nicht für Straßenfertiger, sondern lediglich für landwirtschaftliche Arbeitsmaschinen.

Aufgabe der vorliegenden Erfindung ist es, einen Straßenfertiger zur Verfügung zu stellen, bei dem die oben genannten Probleme mit konstruktiv möglichst einfachen Mitteln überwunden werden, ohne die Vielseitigkeit des Einsatzes des Straßenfertigers im Geringsten zu beeinträchtigen.

Diese Aufgabe wird gelöst durch einen Straßenfertiger mit den Merkmalen des Anspruchs 1. Vorteilhafte Weiterbildungen der Erfindung sind in den Unteransprüchen angegeben.

Erfindungsgemäß ist vorgesehen, dass die mindestens eine an den Straßenfertiger anschließbare mechanische Zusatzkomponente eine drahtlos auslesbare Identifikationseinrichtung aufweist, die mittels eines geeigneten Lesekopfes am Straßenfertiger ausgelesen werden kann, woraufhin die durch den Lesekopf ausgelesene Identifikation der Zusatzkomponente der Steuerung zuführbar ist, um dort das Steuerprogramm des Straßenfertigers in Abhängigkeit von der oder den identifizierten Zusatzkomponenten einzurichten. Mit diesen Merkmalen werden eine ganze Reihe von Vorteilen ermöglicht. Der wesentliche Aspekt der Erfindung liegt darin, dass die wahlweise vorsehbaren und zum Teil gegeneinander austauschbaren mechanischen Zusatzkomponenten am Straßenfertiger automatisch erkannt und daraufhin im Steuerprogramm des Straßenfertigers berücksichtigt werden. Eine zeitraubende und möglicherweise störanfällige manuelle Programmierung kann entfallen. Indem der Lesekopf zum drahtlosen Auslesen der Identifikationseinrichtung ausgebildet ist, kann eine ebenfalls zeitaufwändige Anbindung der Zusatzkomponenten am Straßenfertiger durch elektrische Kabel entfallen, sofern dies für den Betrieb der Zusatzkomponenten nicht anderweitig erforderlich ist.

Als mechanische Zusatzkomponenten zum Straßenfertiger, für die die erfindungsgemäße Identifikation vorteilhaft ist, eignen sich beispielsweise eine Einbaubohle, Einbaubohlenverlängerungen, ein Sprühmodul, ein Zusatztankmodul, Sprührampen, und/oder andere mechanische Baugruppen.

Vorzugsweise weist die Identifikationsvorrichtung einen Speicher auf, von dem zumindest ein Teil beschreibbar ist, und der Lesekopf an der Zugmaschine ist gleichzeitig als Schreib-/Lesekopf zum Lesen und Beschreiben des Speichers der Identifikationseinrichtung ausgebildet. Dies ermöglicht einen vielseitigeren Einsatz der Identifikationseinrichtungen. Sie dienen nun nicht mehr allein zum Ausgeben einer Kennung, wie beispielsweise bei einem Barcode, sondern können sich zeitlich verändernde Daten über den Betrieb der jeweiligen Zusatzkomponente speichern.

Denkbar ist es beispielsweise, dass die Identifikationseinrichtung Daten zur Kennzeichnung der Modulnummer, des Typs, der Ausführung, der Dimension, der Arbeitsdaten und/oder der Wartungsdaten der Zusatzkomponente enthält. Die Modulnummer kann eine individuelle Seriennummer der Zusatzkomponente sein. Der Typ der Zusatzkomponente gibt ihren Verwendungszweck an, beispielsweise ob es sich um ein Bohlenverlängerungsteil, einen Zusatztank oder ein Sprühmodul handelt. Die Ausführungen und die Dimensionen enthalten spezielle Kenngrößen der jeweiligen Zusatzkomponente, bei einem Tank beispielsweise sein Fassungsvermögen, bei einem Sprühmodul den erzeugbaren Druck, bei einer Einbaubohlenverlängerung deren Abmessungen und deren Ausrüstung mit Verdichtungsaggregaten. Die Arbeitsdaten geben den bisherigen Betriebsablauf der jeweiligen Zusatzkomponente an, beispielsweise die summierte Zahl ihrer Betriebsstunden. Die Wartungsdaten können angeben, wann die Zusatzkomponente zuletzt gewartet wurde, beziehungsweise nach welchem Zeitraum die nächste Wartung erfolgen sollte.

In einer besonders vorteilhaften Ausführungsvariante der Erfindung ist die Identifikationseinrichtung ein RFID-(Radio Frequency Identification)Transponder. Der Lesekopf, beziehungsweise Schreib-Lesekopf ist dann entsprechend ein RFID-(Schreib-/)Lesekopf.

Bei der bisher überwiegend in der Logistikbranche eingesetzten RFID-Technik erfolgt die Kommunikation zwischen einem Schreib-/Lesekopf und einem "TAG" oder Transponder über Funkwellen, die eine Frequenz von einigen Kilohertz bis hin zu mehreren hundert Gigahertz haben können. Das vom Schreib-/Lesekopf ausgesendete Funksignal hat dabei zwei Funktionen. Zum einen dient es zur induktiven Energieübertragung an den Transponder. Zum anderen dient es zum Anregen eines Schwingkreises auf dem Transponder, um auf diese Weise die auf dem Transponder gespeicherten beziehungsweise den Transponder identifizierenden Signale drahtlos auszulesen.

Im vorliegenden Fall eines Straßenfertigers hat die RFID-Technik den immensen Vorteil, dass sie auch unter widrigsten Umgebungsbedingungen störungsfrei funktioniert. Weder die beim Straßenbau erforderlichen, hohen Temperaturen, noch die bei der Straßenfertigung unvermeidbare Verschmutzung beeinträchtigen die Leistungsfähigkeit der RFID-Kommunikation, ebenso wenig wie Staub oder Feuchtigkeit. Auch ohne eine optische Sichtverbindung zwischen Transponder beziehungsweise Datenträger und Lesekopf beziehungsweise Lesestation läuft der Datenaustausch in eine oder in beide Richtungen stets zuverlässig ab. Selbstverständlich sind auch andere Identifikationssysteme möglich.

Zweckmäßig ist es, wenn am Straßenfertiger ein Kommunikationsbus zur Kommunikation zwischen der Steuerung und dem Lesekopf, beziehungsweise dem Schreib-/Lesekopf vorgesehen ist. Über diesen Kommunikationsbus können verschiedene Leseköpfe zum Erkennen verschiedener Zusatzkomponenten angesteuert werden.

Vorzugsweise ist in der Steuerung oder zwischen dem Lesekopf und der Steuerung eine Auswerteeinheit zum Auswerten der mittels des Lesekopfs ausgelesenen Identifikation der Zusatzkomponente vorgesehen. Sie dient dazu, die am Lesekopf empfangenen Signale in ein für die Steuerung geeignetes Format zu überführen.

An der Zugmaschine können mehrere Leseköpfe oder Schreib-/Leseköpfe vorgesehen sein. Günstig ist es, wenn ein Lesekopf jeweils auf den Einbauort einer Zusatzkomponente ausgerichtet ist, um diese Zusatzkomponente leichter erkennen zu können.

Vorzugsweise verfügt der Straßenfertiger über eine Anzeige, um einem Bediener des Straßenfertigers die identifizierte(n) Zusatzkomponente(n) anzuzeigen. Bei Bedarf ermöglicht dies dem Bediener des Straßenfertigers eine Kontrolle darüber, ob alle relevanten Zusatzkomponenten korrekt erfasst wurden.

Um diese Funktionen weiter zu verbessern, kann die Anzeige geeignet sein zum Anzeigen der ermittelten Modulnummer, des Typs, der Ausführung, der Dimension, der Arbeitsdaten und/oder der Wartungsdaten einer bestimmten Zusatzkomponente. Denkbar wäre eine Menüführung der Anzeige, mittels derer der Bediener die jeweiligen Angaben abrufen kann.

In einer vorteilhaften Ausführungsvariante sind die Arbeitsdaten einer bestimmten Zusatzkomponente auf deren Identifikationseinrichtung aktualisierbar unter Berücksichtigung der mittels der Steuerung bestimmten Betriebsdauer der Zusatzkomponente. Zu diesem Zweck könnte die Steuerung automatisch die Zeit messen, während derer eine bestimmte Zusatzkomponente in Betrieb war. Beim Beenden eines bestimmten Steuerprogramms oder beim Abschalten des Straßenfertigers wird die aktualisierte Betriebsdauer auf der Identifikationseinrichtung der Zusatzkomponente gespeichert.

Gemäß der Erfindung ist am Straßenfertiger ferner ein Sensor zum Messen einer die aktuelle Lage oder Dimension der Zusatzkomponente charakterisierenden Länge vorgesehen. Die gemessene Länge kann dann in der Steuerung in dem zum Steuern des Straßenfertigers verwendeten Programm automatisch berücksichtigt werden.

Der Sensor zum Messen der Länge ist mittels einer Laufzeitmessung eines optischen oder elektromagnetischen Signals eingerichtet. Wegen der möglichen Einwirkungen durch Staub, Nebel oder Verschmutzung wird dabei ein elektromagnetisches Signal gegenüber einem optischen bevorzugt. Zur Laufzeitmessung könnte am Sensor ein Zeitmessglied vorgesehen sein, beispielsweise ein Zählglied, um die Zeit zwischen dem Aussenden und dem Empfangen eines Signals zu messen.

Insbesondere wäre es denkbar, dass es sich bei der gemessenen Länge um einen Abstand zwischen dem Lesekopf und der Identifikationseinrichtung der Zusatzkomponente handelt, und dass der zum Auslesen der Identifikationseinrichtung ausbildete Lesekopf gleichzeitig als Sensor zum Messen dieses Abstandes mittels einer Laufzeitmessung eingerichtet ist. Handelt es sich bei der Identifikationseinrichtung um einen RFID-Transponder, könnten beispielsweise die vom Lesekopf ausgesendeten Funkwellen sowohl zum Auslesen der Identifikationseinrichtung, als auch über ihre Laufzeitmessung zum Bestimmen des Abstandes der Zusatzkomponente dienen.

Im Folgenden wird ein vorteilhaftes Ausführungsbeispiel der Erfindung anhand einer Zeichnung näher erläutert. Im Einzelnen zeigen:
- Figur 1: eine schematische Seitenansicht eines Straßenfertigers,
- Figur 2: eine schematische Draufsicht auf den in Figur 1 gezeigten Straßenfertiger,
- Figur 3: eine schematische Darstellung des Identifikationssystems auf dem Straßenfertiger, und
- Figur 4: eine schematische Darstellung der Abstandsmessung an einer schwenkbaren Sprührampe.

Gleiche Komponenten sind in den Zeichnungen durchgängig mit gleichen Bezugszeichen versehen.

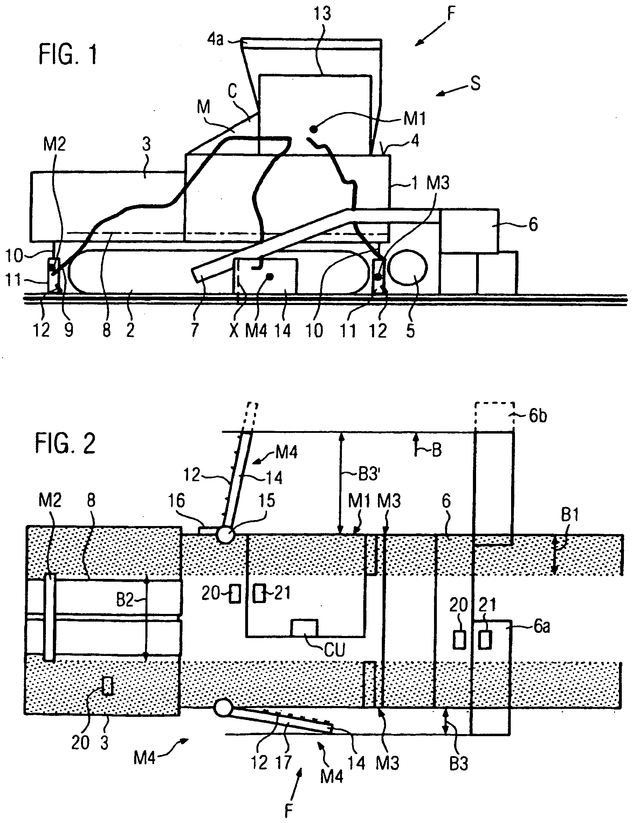

Figur 1 zeigt in schematischer Seitenansicht einen Straßenfertiger F mit einer Zugmaschine 1. Mittels eines motorisierten Fahrwerks 2, bei dem es sich beispielsweise um ein Raupenfahrwerk oder um ein Radfahrwerk handeln kann, ist die Zugmaschine 1 fahrbar. Im vorderen Bereich der Zugmaschine 1 ist ein Gutbunker 3 zur Aufnahme des Materials für den aufzubringenden Straßenbelag vorgesehen, insbesondere Einbaumischgut. Auf einer Bedienplattform 4 ist der Führerstand der Zugmaschine 1 angeordnet, der durch ein vorzugsweise abnehmbares oder abklappbares Dach 4a geschützt ist.

An dem in Fahrtrichtung gesehen hinteren Ende der Zugmaschine 1 ist eine Querverteilvorrichtung 5 vorgesehen, beispielsweise eine Verteilerschnecke, die das auszubringende Einbaumischgut über die gesamte Einbaubreite verteilt. Hinter der Querverteilvorrichtung 5 ist eine Einbaubohle 6 angeordnet, die über nicht dargestellte Mittel zum Komprimieren und Glätten des ausgebrachten Guts verfügt, beispielsweise über Tamper, Pressleisten und Glättbleche. Die Einbaubohle 6 ist über einen nach oben schwenkbaren Holm 7 an der Zugmaschine angelenkt und wird von dieser geschleppt.

Unter dem Gutbunker 3 und der Bedienplattform 4 ist eine horizontale Fördervorrichtung 8 vorgesehen, beispielsweise ein Kratzerband oder mehrere nebeneinanderliegende Kratzerbänder. Sie dient dazu, das Einbaumischgut aus dem Gutbunker 3 heraus und unter der Bedienplattform 4 hindurch zur Querverteilvorrichtung 5 zu transportieren.

Aus der Draufsicht in Figur 2 ist ersichtlich, dass die Einbaubohle 6, hier ausgebildet als Ausziehbohle, zwei seitlich ausfahrbare Verlängerungsteile 6a umfasst, um die Arbeitsbreite des Straßenfertigers F vergrößern zu können. Denkbar wäre es auch, als weitere Zusatzkomponenten zusätzliche, feste Verlängerungsteile 6b an die Primär-Einbaubohle 6 oder an deren Ausziehteile 6a anzusetzen.

An der Zugmaschine 1 ist eine programmierbare Steuerung C vorgesehen, die den Betrieb des Primärantriebs M der Zugmaschine, der Einbaubohle 6, der Fördervorrichtung 8, des Querverteilers 5 und z. B. der Sprüheinrichtung S steuert und koordiniert.

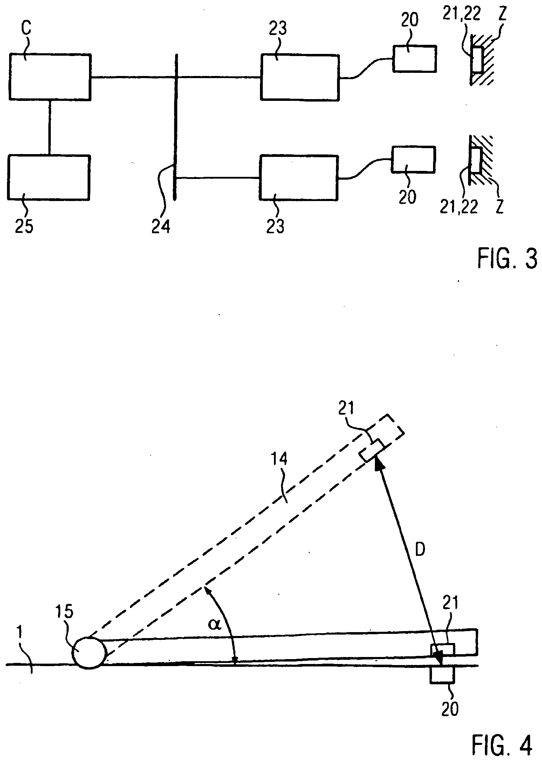

Bei einem herkömmlichen Straßenfertiger mit Zusatzkomponenten mussten die Parameter sämtlicher Zusatzkomponenten manuell durch den Bediener in die Steuerung C eingegeben werden, um in dem dort ablaufenden Steuerprogramm berücksichtigt werden zu können. Im Gegensatz dazu ermöglicht die vorliegende Erfindung das automatische Erkennen und Berücksichtigen sämtlicher Zusatzkomponenten. Zu diesem Zweck sind, wie aus den Figuren 2 und 3 hervorgeht, über die Zugmaschine 1 verteilt eine Vielzahl von Schreib-/Leseköpfen 20 vorgesehen, die zum Aussenden von Funkwellen im Bereich von einigen Kilohertz bis zu mehreren 100 Gigahertz geeignet sind. Insbesondere sind die Schreib-/Leseköpfe 20 damit Teil eines RFID-Systems, mit geeigneten Gegenstücken in Form von RFID-Transpondern beziehungsweise -identifikationseinrichtungen 21, die auf den jeweiligen Zusatzkomponenten Z angeordnet sind, beispielsweise auf einem der Einbaubohlen-Verlängerungsteile 6a, 6b. Die Identifikationseinrichtungen 21 verfügen über einen Speicher 22, von dem ein Teil beschreibbar ist. Die Schreib-/Leseköpfe 20 sind dazu ausgebildet, durch die Funkwellen Energie auf die Identifikationseinrichtungen 21 zu übertragen und den Speicher 22 der Identifikationseinrichtungen 21 auszulesen und zu beschreiben. In dem Speicher 22 können Daten gespeichert sein, die die Modulnummer, den Typ, die Ausführung, die Dimension, die Arbeitsdaten und/oder die Wartungsdaten der jeweiligen Zusatzkomponente Z kennzeichnen. Denkbar wäre es, dass die Daten bezüglich der Modulnummer, des Typs, der Ausführung und der Dimension in dem nicht beschreibbaren Teil des Speichers gespeichert, während die Arbeits- und Wartungsdaten der Zusatzkomponente Z im beschreibbaren Teil des Speichers 22 gespeichert sein kann.

Jedem Schreib-/Lesekopf 20 ist eine Auswerteeinheit 23 zugeordnet, um das von der Identifikationseinrichtung 21 gesendete und am Schreib-/Lesekopf 20 empfangene Signal in ein durch die Steuerung C lesbares Format umzuwandeln. Beispielsweise kann es sich bei der Auswerteeinheit 23 um einen Analogdigitalwandler handeln. Als Alternative zum Vorsehen einer eigenen Auswerteeinheit 23 für jeden Schreib-/Lesekopf 20 wäre es denkbar, dass eine gemeinsame Auswerteeinheit 23 an beziehungsweise in der Steuerung C vorgesehen ist.

Die Kommunikation zwischen den Schreib-/Leseköpfen und der Steuerung C des Straßenfertigers F erfolgt über einen Kommunikationsbus 24. Über den Kommunikationsbus 24 gelangen die ausgelesenen Daten vom Schreib-/Lesekopf 20 beziehungsweise von der jeweiligen Auswerteeinheit 23 zur zentralen Steuerung C. Denkbar wäre es, dass die Schreib-/Leseköpfe 20 über den Bus 24 auch mit Steuersignalen und/oder mit Strom versorgt werden.

Die Steuerung C ist dazu eingerichtet, die von den Schreib-/Leseköpfen 20 empfangenen Daten der Identifikationseinrichtungen 20 zu speichern und vor allem das Steuerprogramm für den Straßenfertiger F in Abhängigkeit von den identifizierten Zusatzgeräten Z und deren Eigenschaften zu verändern. Darüber hinaus ist eine Anzeige 25 vorgesehen, beispielsweise ein Display. An der Anzeige 25 werden die von der Steuerung C erfassten Zusatzgeräte Z des Straßenfertigers F angezeigt. Über ein Menü können bestimmte Eigenschaften dieser Zusatzgeräte Z ausgewählt und angezeigt werden.

In Figur 2 ist zu sehen, dass die Schreib-/Leseköpfe 20 auf der Zugmaschine so angeordnet sind, dass sie geeignet zum Erkennen der Identifikationseinrichtung 21 einer bestimmten Zusatzkomponente Z ausgerichtet sind, insbesondere in der Nähe der Identifikationseinrichtung 21 angeordnet sind, wenn die Zusatzkomponente Z am Straßenfertiger F vorgesehen wird. Beispielsweise ist ein Schreib-/Lesekopf 20 an der Zugmaschine so angeordnet, dass er sich in der Nähe der RFID-Identifikationseinrichtung 21 der Einbaubohle 6 befindet. Ein weiterer Schreib-/Lesekopf 20 ist z. B. an der Einbaubohle 6 so angeordnet, dass er sich möglichst nahe an der Identifikationseinrichtung 21 auf einem Verlängerungsteil 6a der Bohle befindet. Ein weiterer Schreib-/Lesekopf 20 kann am Gutbunker 3 vorgesehen sein, um dort einen (in Figur 2 nicht gezeigten) Zusatztank einer Sprüheinrichtung S oder einen Materialbunkereinsatz als weitere, optionale Zusatzkomponente Z zu identifizieren.

Bei einigen Komponenten, insbesondere bei den Ausziehbohlen 6a, kann ihre Lage oder Ausrichtung relativ zur Zugmaschine 1 verändert werden. Diese Lage kann, neben der unveränderlichen Abmessung der jeweiligen Zusatzkomponente, eine weitere wichtige Größe bei der Steuerung des Straßenfertigers F darstellen. In einer vorteilhaften Ausführungsvariante der Erfindung ist daher ein Sensor vorgesehen, um automatisch die Lage der jeweiligen Zusatzkomponente Z zu messen und der Steuerung C zuzuführen. Insbesondere kann die Lage der Zusatzkomponente Z über eine Längenmessung festgestellt werden.

Bei dem in Figur 4 dargestellten Ausführungsbeispiel handelt es sich bei der Zusatzkomponente Z um eine Sprührampe 14. An der Zugmaschine 1 des Straßenfertigers F ist ein Schreib-/Lesekopf 20 vorgesehen, der geeignet ausgerichtet ist, um mit einer Identifikationseinrichtung 21 auf der Sprührampe 14 zu kommunizieren. In einer ersten, mit durchgezogenen Linien gezeigten Stellung liegt die Sprührampe 14 parallel zur Fahrtrichtung des Fertigers F an der Zugmaschine 1 an. Der Abstand zwischen dem Schreib-/Lesekopf 20 und der Identifikationseinrichtung 21 ist minimal. In einer zweiten, mit gestrichelten Linien gezeichneten Stellung ist die Sprührampe 14 relativ zur Zugmaschine 1 abgewinkelt. Der Abstand D zwischen dem Schreib-/Lesekopf 20 und der Identifikationseinrichtung 21 stellt ein Maß für den Winkel α dar, um den die Sprührampe 14 abgewinkelt ist.

Die Messung des Abstands D kann insbesondere mittels einer Laufzeitmessung eines elektromagnetischen Signals erfolgen. Vorzugsweise wird dafür das Signal der Funkwellen verwendet, mit der die RFID-Identifikationseinrichtung 21 ausgelesen werden soll. Sobald der Schreib-/Lesekopf 20 die Funkwellen aussendet, beginnt ein Zähler oder ein Zählwerk im Schreib-/Lesekopf 20 zu laufen. Der Schreib-/Lesekopf 20 registriert den Eingang des von der Identifikationseinrichtung 21 zurückgesendeten Signals und stoppt das Zählwerk, sobald das Signal empfangen wurde. Je länger die zwischen dem Aussenden und dem Empfang des Signals verstrichene Zeit war, desto weiter ist die Sprührampe 14 relativ zur Zugmaschine 1 abgewinkelt. Die gemessene Zeit, die dem Abstand D beziehungsweise dem Winkel α entspricht, kann der Steuerung C zugeführt werden, um dort automatisch die Lage der Sprührampe 14 zu berücksichtigen. Je weiter die Sprührampe 14 vom Straßenfertiger F abgewinkelt ist, desto mehr Bitumenemulsion muss pro Zeiteinheit von ihr verteilt werden, um einen Belag mit konstanter Dicke auf dem Planum zu schaffen. Die ausgebrachte Menge an Bitumenemulsion könnte durch den Druck in der Sprüheinrichtung S und/oder durch Ansteuerung von Ventilelementen 17 in der Sprührampe 14 erzielt werden.

Bei einem Ausführungsbeispiel könnte auch bezüglich der Lage der Einbaubohlen-Ausziehteile 6a, 6b eine Lagebestimmung sinnvoll sein, insbesondere über eine Längenmessung. Diese Längenmessung könnte senkrecht zur Fahrtrichtung des Straßenfertigers F beziehungsweise parallel zur Länge der Einbaubohle 6 erfolgen. Dabei könnte die Distanz zwischen einem Schreib-/Lesekopf 20 an der festen Einbaubohle 6 und einem Reflektor am Ende der Verlängerungsteile 6a, 6b bestimmt werden. Bei dem Reflektor könnte es sich um eine Identifikationseinrichtung 21 oder ein ausschließlich als Reflektor wirkendes Element handeln.

Ausgehend von dem dargestellten Ausführungsbeispiel könnte der erfindungsgemäße Straßenfertiger F auf vielfache Weise verändert werden. Statt der RFID-Technik könnten auch andere drahtlose Kommunikationswege zum automatischen Erkennen von Zusatzkomponenten Z eingesetzt werden. Wie in Figur 2 gezeigt, könnte am Gutbunker 3 ein Schreib-/Lesekopf 20 vorgesehen sein, um einen dort abgestellten Zusatztank für die Sprüheinrichtung S oder ein Materialbunkereinsatz als weitere Zusatzkomponente Z zu erkennen und zu identifizieren.

In einer einfacheren Variante der Erfindung könnten die Identifikationseinrichtungen 21 einen nicht wieder beschreibbaren Speicher 22 haben. In diesem Fall würde es genügen, wenn statt der Schreib-/Leseköpfe 20 reine Leseköpfe 20 verwendet würden.

Die Identifikationseinrichtungen, insbesondere RFID-Transponder, könnten auch bei der Lagerhaltung zum Registrieren der aktuell nicht verwendeten und daher gelagerten Zusatzkomponenten eingesetzt werden.

## Patentansprüche

1. Straßenfertiger (F) mit einer Zugmaschine (1), einer programmierten oder programmierbaren Steuerung (C) und einer oder mehreren mechanischen Zusatzkomponenten (Z), die wahlweise an die Zugmaschine (1) anschließbar sind,
**dadurch gekennzeichnet, dass** die mindestens eine mechanische Zusatzkomponente (Z) eine drahtlos auslesbare Identifikationseinrichtung (21) aufweist, wobei die Zugmaschine (1) einen zum Auslesen der Identifikationseinrichtung (21) geeigneten Lesekopf (20) aufweist, und wobei die durch den Lesekopf (20) ausgelesene Identifikation der Zusatzkomponente (Z) der Steuerung (C) zuführbar ist, und
ein Sensor zum Messen einer die aktuelle Lage oder Dimension der Zusatzkomponente charakterisierenden Länge (D) vorgesehen ist, um in der Steuerung das zum Steuern des Straßenfertigers (F) verwendete Programm in Abhängigkeit von der gemessenen Länge (D) einzurichten,
wobei der Sensor zum Messen der Länge (D) mittels einer Laufzeitmessung eines optischen oder elektromagnetischen Signals eingerichtet ist.

2. Straßenfertiger nach Anspruch 1, **dadurch gekennzeichnet, dass** die Zusatzkomponenten (Z) zum Beispiel eine Einbaubohle, eine Einbaubohlenverlängerung (6a, 6b), Sprühmodule, ein Zusatztankmodul, eine oder mehrere Sprührampen (14), Transportbänder und/oder andere mechanische Baugruppen umfassen.

3. Straßenfertiger nach einem der vorangehenden Ansprüche, **dadurch gekennzeichnet, dass** die Identifikationseinrichtung (21) einen Speicher (22) aufweist, von dem zumindest ein Teil beschreibbar ist, und dass Lesekopf (20) an der Zugmaschine (1) als Schreib-/Lesekopf (20) zum Lesen und Beschreiben der Identifikationseinrichtung (21) ausgebildet ist.

4. Straßenfertiger nach einem der vorangehenden Ansprüche, **dadurch gekennzeichnet, dass** die Identifikationseinrichtung (21) Daten zur Kennzeichnung der Modulnummer, des Typs, der Ausführung, der Dimension, der Arbeitsdaten und/oder der Wartungsdaten der Zusatzkomponente (Z) enthält.

5. Straßenfertiger nach einem der vorangehenden Ansprüche, **dadurch gekennzeichnet, dass** die Identifikationseinrichtung (21) ein RFID-transponder, radio frequency identification transponder, (21) ist.

6. Straßenfertiger nach Anspruch 5, **dadurch gekennzeichnet, dass** ein Kommunikationsbus (25) zur Kommunikation zwischen der Steuerung (C) und dem Lesekopf (20) bzw. Schreib-/Lesekopf (20) vorgesehen ist.

7. Straßenfertiger nach einem der vorangehenden Ansprüche, **dadurch gekennzeichnet, dass** in der Steuerung (C) oder zwischen dem Lesekopf (20) und der Steuerung (C) eine Auswerteeinheit (23) zum Auswerten der mittels des Lesekopfs (20) ausgelesenen Identifikation der Zusatzkomponente (Z) vorgesehen ist.

8. Straßenfertiger nach einem der vorangehenden Ansprüche, **dadurch gekennzeichnet, dass** an der Zugmaschine (1) mehrere Leseköpfe (20) oder Schreib-/Leseköpfe (20) vorgesehen sind, die jeweils auf den Einbauort einer Zusatzkomponente (Z) ausgerichtet sind.

9. Straßenfertiger nach einem der vorangehenden Ansprüche, **dadurch gekennzeichnet, dass** eine Anzeige (25) vorgesehen ist, um einem Bediener des Straßenfertigers (F) das oder die identifizierten Zusatzkomponenten (Z) anzuzeigen.

10. Straßenfertiger nach Anspruch 9, **dadurch gekennzeichnet, dass** die Anzeige (25) geeignet ist zum Anzeigen der ermittelten Modulnummer, des Typs, der Ausführung, der Dimension, der Arbeitsdaten und/oder der Wartungsdaten einer Zusatzkomponente (Z).

11. Straßenfertiger nach einem der vorangehenden Ansprüche, **dadurch gekennzeichnet, dass** die Arbeitsdaten einer Zusatzkomponente (Z) auf deren Identifikationseinrichtung aktualisierbar sind.

12. Straßenfertiger nach einem der vorangehenden Ansprüche, **dadurch gekennzeichnet, dass** die Länge (D) ein Abstand zwischen dem Lesekopf (20) und der Identifikationseinrichtung (21) ist, und dass der Lesekopf (20) als Sensor zum Messen dieses Abstandes mittels einer Laufzeitmessung eines optischen oder elektromagnetischen Signals eingerichtet ist.

## Claims

1. A road finisher (F) comprising a tractor (1), a programmed or programmable control unit (C), and one or a plurality of mechanical auxiliary components (Z) which are adapted to be selectively attached to the tractor (1),
**characterized in that**
the at least one mechanical auxiliary component (Z) is provided with a wirelessreadable identification means (21), wherein the tractor (1) is provided with a read head (20) suitable for reading the identification means (21), and wherein the identification of the auxiliary component (Z) read by the read head (20) is adapted to be supplied to the control unit (C), and
a sensor is provided for measuring a length (D) characterizing the current position or dimensions of the auxiliary component so as to configure, in dependence upon the measured length (D), in the control unit the program used for controlling the road finisher (F),
wherein the sensor is configured to measure the length (D) by means of a transit time measurement of an optical or electromagnetic signal.

2. A road finisher according to claim 1, **characterized in that** the auxiliary components (Z) comprise e.g. a screed, a screed extension (6a, 6b), spray modules, an auxiliary tank module, one or a plurality of spray bars (14), conveyor belts and/or other mechanical devices.

3. A road finisher according to one of the preceding claims, **characterized in that** the identification means (21) includes a memory (22), at least part of which can be written on, and that the read head (20) on the tractor (1) is implemented as a write/read head (20) for reading the identification means (21) and for writing into the same.

4. A road finisher according to one of the preceding claims, **characterized in that** the identification means (21) contains data for identifying the module number, the type, the model, the dimensions, the operating data and/or the maintenance data of the auxiliary component (Z).

5. A road finisher according to one of the preceding claims, **characterized in that** the identification means (21) is a RFID - transponder, radio frequency identification transponder, (21).

6. A road finisher according to claim 5, **characterized in that** a communication bus (25) is provided for communication between the control unit (C) and the read head (20) or the write/read head (20).

7. A road finisher according to one of the preceding claims, **characterized in that** an evaluation unit (23) for evaluating the identification of the auxiliary component (Z) read by means of the read head (20) is provided in the control unit (C) or between the read head (20) and the control unit (C).

8. A road finisher according to one of the preceding claims, **characterized in that** the tractor (1) has provided thereon a plurality of read heads (20) or write/read heads (20), which are each directed towards the place of installation of an auxiliary component (Z).

9. A road finisher according to one of the preceding claims, **characterized in that** an indicating means (25) is provided for indicating to an operator of the road finisher (F) the identified auxiliary component (Z) or auxiliary components (Z).

10. A road finisher according to claim 9, **characterized in that** the indicating means (25) is suitable for indicating the ascertained module number, the type, the model, the dimensions, the operating data and/or the maintenance data of an auxiliary component (Z).

11. A road finisher according to one of the preceding claims, **characterized in that** the operating data of an auxiliary component (Z) can be updated on the identification means of said auxiliary component (Z).

12. A road finisher according to one of the preceding claims, **characterized in that** the length (D) is a distance between the read head (20) and the identification means (21), and that the read head (20) is implemented as a sensor for measuring this distance by means of a transit time measurement of an optical or electromagnetic signal.

## Revendications

1. Finisseur de route (F) comprenant une machine de traction (1), une commande (C) programmée ou programmable, et un ou plusieurs composants additionnels mécaniques (Z), qui peuvent être raccordés sélectivement à la machine de traction (1), **caractérisé en ce qu'**au moins un composant additionnel mécanique (Z) présente un système d'identification (21) pouvant être lu sans fil, la machine de traction (1) présentant une tête de lecture (20) adaptée à lire le système d'identification (21), et l'identification du composant additionnel (Z) lue par la tête de lecture (20) pouvant être transmise à la commande (C), et
**en ce qu'**il est prévu un capteur pour mesurer une longueur (D) caractérisant la position ou la dimension actuelle du composant additionnel, en vue de configurer, dans la commande, le programme utilisé pour commander le finisseur de route (F), en fonction de la longueur (D) mesurée,
le capteur étant configuré pour mesurer la longueur (D) au moyen d'une mesure de durée de propagation d'un signal optique ou électromagnétique.

2. Finisseur de route selon la revendication 1, **caractérisé en ce que** les composants additionnels (Z) comprennent par exemple une table de finisseur, un prolongateur de table de finisseur (6a, 6b), des modules d'aspersion, un module de réservoir additionnel, une ou plusieurs rampes d'aspersion (14), des bandes de transport et/ou d'autres sous-groupes mécaniques.

3. Finisseur de route selon l'une des revendications précédentes, **caractérisé en ce que** le système d'identification (21) comprend une mémoire (22) dont au moins une partie est accessible en écriture, et **en ce que** la tête de lecture (20) sur la machine de traction (1) est réalisée en tant que tête de lecture/écriture (20) pour accéder en lecture et écriture au système d'identification (21).

4. Finisseur de route selon l'une des revendications précédentes, **caractérisé en ce que** le système d'identification (21) renferme des données pour caractériser le numéro de module, le type, le mode de réalisation, la dimension, les données de travail et/ou les données d'entretien du composant additionnel (Z).

5. Finisseur de route selon l'une des revendications précédentes, **caractérisé en ce que** le système d'identification (21) est un transpondeur RFID (21), pour radio frequency identification transponder.

6. Finisseur de route selon la revendication 5, **caractérisé en ce qu'**il est prévu un bus de communication (25) pour la communication entre la commande (C) et la tête de lecture (20) ou tête de lecture/écriture (20).

7. Finisseur de route selon l'une des revendications précédentes, **caractérisé en ce que** dans la commande (C) ou entre la tête de lecture (20) et la commande (C), il est prévu une unité de traitement (23) pour traiter l'identification du composant additionnel (Z), ayant été lue au moyen de la tête de lecture (20).

8. Finisseur de route selon l'une des revendications précédentes, **caractérisé en ce que** sur la machine de traction (1) sont prévues plusieurs têtes de lecture (20) ou têtes de lecture/écriture (20), qui sont orientées chacune en direction du lieu d'implantation d'un composant additionnel (Z).

9. Finisseur de route selon l'une des revendications précédentes, **caractérisé en ce qu'**il est prévu un dispositif de visualisation (25) en vue de visualiser, pour un utilisateur du finisseur de route (F), le ou les composants additionnels (Z) identifiés.

10. Finisseur de route selon la revendication 9, **caractérisé en ce que** le dispositif de visualisation (25) est adapté à visualiser le numéro de module, le type, le mode de réalisation, la dimension, les données de travail et/ou les données d'entretien d'un composant additionnel (Z), ayant été déterminés.

11. Finisseur de route selon l'une des revendications précédentes, **caractérisé en ce que** les données de travail d'un composant additionnel (Z) peuvent être actualisées sur son système d'identification.

12. Finisseur de route selon l'une des revendications précédentes, **caractérisé en ce que** la longueur (D) est une distance d'espacement entre la tête de lecture (20) et le système d'identification (21), et **en ce que** la tête de lecture (20) est configurée en tant que capteur pour mesurer cette distance d'espacement au moyen d'une mesure de durée de propagation d'un signal optique ou électromagnétique.
